**Europäisches Patentamt**

**European Patent Office**

**Office européen des brevets**

(19)

(11) Veröffentlichungsnummer: **0 247 294 B1**

(12) # EUROPÄISCHE PATENTSCHRIFT

(45) Veröffentlichungstag der Patentschrift: **30.01.91**

(51) Int. Cl.⁵: **G 01 V 1/16**

(21) Anmeldenummer: **87102804.9**

(22) Anmeldetag: **27.02.87**

(54) **Bodenhorchgerät mit mindestens einer Dreikomponenten-Geophonsonde.**

(30) Priorität: **27.05.86 DE 3617847**

(43) Veröffentlichungstag der Anmeldung:
**02.12.87 Patentblatt 87/49**

(45) Bekanntmachung des Hinweises auf die
Patenterteilung:
**30.01.91 Patentblatt 91/05**

(84) Benannte Vertragsstaaten:
**AT BE CH DE ES FR GB GR IT LI LU NL SE**

(56) Entgegenhaltungen:
**CH-A- 541 844**
**US-A- 4 151 504**
**US-A- 4 163 206**

(73) Patentinhaber: **WASAGCHEMIE Sythen GmbH**
**Werkstrasse 111**
**D-4358 Haltern-Sythen (DE)**
(73) Patentinhaber: **Baule, Heinrich, Prof. Dr. rer. nat.**
**Am Waldschlösschen 13**
**D-4630 Bochum 1 (DE)**

(72) Erfinder: **Baule, Heinrich, Prof. Dr. rer. nat.**
**Am Waldschlösschen 13**
**D-4630 Bochum 1 (DE)**
Erfinder: **Borgers, Manfred**
**Heinrich-Rumpf-Strasse 5**
**D-4358 Haltern 1 (DE)**

(74) Vertreter: **Ostriga, Harald, Dipl.-Ing. et al**
**Patentanwälte Dipl.-Ing. Harald Ostriga Dipl.-**
**Ing. Bernd Sonnet Stresemannstrasse 6-8**
**D-5600 Wuppertal 2 (DE)**

**Beschreibung**

Die Erfindung betrifft ein Bodenhorchgerät, wie es im Oberbegriff des Patentanspruchs 1 beschrieben und hinsichtlich der beschriebenen Merkmale durch offenkundige Vorbenutzung bekanntgeworden ist.

Derartige Bodenhorchgeräte sind geeignet zum Einsatz im Katastrophenschutz, insbesondere zum Abhorchen von Klopfzeichen zur Ortung und Rettung Verschütteter. Das bekannte Bodenhorchgerät kann mit einer einzelnen Dreikomponenten-Geophonsonde oder aber mit mehreren Geophonsonden, die kettenartig oder teppichartig ausgelegt werden, zum Einsatz gelangen.

Das bekannte Bodenhorchgerät arbeitet mit Dreikomponenten-Geophonsonden, wie in einem Prospekt "3D unit" Juli 1984 der niederländischen Firma Sensor Nederland bv, 2251 AP Voorschoten, dargestellt.

Eine solche Dreikomponenten-Geophonsonde enthält drei nach dem elektrodynamischen Prinzip arbeitende Einzelgeophone, deren wirksame Schwingungsachsen entsprechend den Achsen x, y und z eines räumlichen rechtwinkligen Koordinaten-Systems angeordnet sind.

Auf diese Weise ist die bekannte Dreikomponenten-Geophonsonde in der Lage, P-Wellen (Primärwellen oder Longitudinalwellen), S-Wellen (Scherwellen oder Transversalwellen) und schließlich O-Wellen (Oberflächenwellen) wiederzugeben. Die vorgenannten Wellentypen haben unterschiedliche Ausbreitungsgeschwindigkeiten: die hochfrequente Primärwelle besitzt die größte, die tieffrequente Scherwelle die geringere und die Oberflächenwelle die geringste Ausbreitungsgeschwindigkeit.

Die von den drei Einzelgeophonen einer jeden Dreikomponenten-Geophonsonde ausgesandten Signale werden über ein Kabel (dessen Aufbau im einzelnen nicht bekannt ist) auf einen Operationsverstärker gegeben, dessen Ausgangssignal über einen elektrodynamischen Kopfhörer (Schallsender) hörbargemacht wird. Ähnliche Kopfhörer wurden zuvor auch in Verbindung mit Bergbauhorchgeräten benutzt (s, Zeitschrift "Glückauf" 1949 S. 161 — 166 sowie 1952 S. 645 — 647).

Das bekannte Bodenhorchgerät wird als verbesserungsbedürftig empfunden, weil es lediglich in der Lage ist, Frequenzen im Hörbereich, d.h. oberhalb von ca. 30 Hz, zu übertragen. Es hat sich jedoch als wesentliches technisches Bedürfnis herausgestellt, besonders tiefe Frequenzen hörbar zu machen, die weit unterhalb der Hörgrenze des menschlichen Ohres liegen. In weichen Böden, festem Sand, Rasenbedeckung, Trümmerschutt und Lockergestein, in denen die hörbaren Frequenzen (im wesentlichen über 30 Hz) in bestimmten Entfernungen von der Schallquelle (Verschütteter) oft ganz fehlen, tritt bevorzugt eine Schallfrequenz auf, die man als "Boden Infraschall" bezeichnen kann.

Die der Erfindung zugrunde liegende Aufgabe besteht darin, diesen Boden-Infraschall, der bevorzugt bei verschütteten Menschen im Katastrophenfall eintritt, mit möglichst einfachen Mitteln baulicher Art zu verwirklichen, die zugleich ein für den Katastrophenschutz besonders robustes Gerät ergeben.

Entsprechend der Erfindung wurde diese Aufgabe dadurch gelöst, daß die drei Einzelgeophone jeder Dreikomponenten-Geophonsonde hintereinandergeschaltet sind und die Geophonsonde lediglich über ein zweiadriges Kabel mit dem Operationsverstärker verbunden ist, dessen Ausgangssignal einen schnellen elektronischen Schalter betätigt, welcher einen mit einer eigenen Gleichspannungsquelle versehenen piezoelektrischen Signalgeber innerhalb eines Gleichspannungskreises einschaltet.

Wesentlich ist zunächst die Hintereinanderschaltung der in den räumlichen Achsen x, y und z angeordneten drei Einzelgeophone einer jeden Dreikomponenten-Geophonsonde. Auf diese Weise werden keine nach den drei räumlichen Achsen gesonderten Signale differenziert empfangen. Im Unterschied zu vorbekannten Dreikomponenten-Geophonanordnungen (s. den bereits erwähnten Prospekt "3D unit"; DE—OS 32 04 874: Dreikomponenten-Geophon ohne Serienschaltung; US—PS 45 34 020: Dreikomponenten-Geophon mit vieladrigem Kabel) begnügt sich die Erfindung vielmehr bewußt mit einem undifferenzierten Mischsignal, da es ihr nur auf die Entdeckung einer tieffrequenten Schallquelle (Verschütteter) an sich ankommt. Daneben ergibt das beim erfindungsgemäßen Bodenhorchgerät lediglich benötigte zweiadrige Kabel für jede Dreikomponenten-Geophonanordnung eine wesentliche bauliche Vereinfachung. Dieses insbesondere für den Fall, daß Geophonsonden-Ketten oder Geophonsonden-Teppiche ausgelegt werden müssen. Bekannt ist es im übrigen (s. DE—AS 24 33 793), mehrere Einzelgeophone zusammenzuschalten, die sich gegenseitig hinsichtlich ihres Schwingungsverhaltens im Sinne einer Richtungsselektivität beeinflussen, was bei der Erfindung jedoch unerwünscht ist. Die DE—AS 24 33 793 zeigt im übrigen keinen Schallsender.

Besonders wichtig ist indes das Erfindungsmerkmal, womit auf besonders einfache Weise die Boden-Infraschallsignale hörbar gemacht werden können: das am Ausgang des Verstärkers anfallende nicht hörbare Signal (Tonimpuls) von beispielsweise 5 Hz betätigt einen schnellen elektronischen Schalter, der einen mit einer eigenen Gleichspannungsquelle versehenen piezoelektrischen Signalgeber etwa für die Dauer des Tonimpulses einschaltet. In diesem Zusammenhang bleibt zu erwähnen, daß der erfindungsgemäß verwandte elektronische Operationsverstärker die Frequenz des von der Geophonsonde abgegebenen Signals als solche nicht verändert. Dieses ist wichtig, weil hierdurch die Hörbarkeitsdauer des Signals (im Unterschied zur etwaigen Verwendung eines Frequenzvervielfachers) nicht verkürzt wird.

Von der DE—PS 30 14 259 ist es schließlich bekannt, durch ein mechanisch schwingendes Horizontalsystem einen Schallsender auszulösen;

dieses bekannte System weist jedoch keine drei Einzelgeophone auf.

Zusammenfassend sei dargestellt, daß es mit der vorbeschriebenen Erfindung gelungen ist, niederfrequenten Schall bzw. Boden-Infraschall, der insbesondere für die Rettung von Verschütteten im Katastrophenfall wichtig ist, auf baulich einfache Weise hörbar zu machen.

Entsprechend weiteren Erfindungsmerkmalen ist jeweils parallel zu den beiden Ausgängen der Einzelgeophone ein die Resonanz in der Eigenfrequenz des Einzelgeophons unterdrückender Ohmscher Widerstand (Dämpfungswiderstand) eingeschaltet. Es ist davon auszugehen, daß für niederfrequente Signale geeignete Geophone eine Eigenfrequenz von etwa 4,5 Hz besitzen. Wenn jetzt also ein BodenInfraschall mit einer Frequenz von 4,5 Hz auftritt, wird durch den Dämpfungswiderstand eine Frequenzüberhöhung vermieden. Ergänzend sei noch erwähnt, daß mit den erfindungsgemäß eingesetzten Tieffrequenzsonden minimal etwa 2 Hz gemessen werden können.

In weiterer Ausgestaltung der Erfindung ist zur Aushaltung von Störsignalen, insbesondere von Rundfunkfrequenzen, parallel zu den beiden Ausgängen des Dreikomponenten-Geophons ein Kondensator eingeschaltet.

Der eingangs erwähnte besonders wichtige schnelle elektronische Schalter (z.B. in Form einer Feldeffekt-Transistorschaltung) bewirkt, daß ein durch die Geophonsonden empfangenes und am Ausgang des Verstärkers abgegebenes z.B. 2-Hz-Signal als Tonimpuls auf den schnellen elektronischen Schaler wirkt, der den piezoelektrischen Signalgeber einschaltet. Dieser zeigt in gewollter Weise undifferenziert bezüglich der Frequenzhöhe des Ausgangssignals das Vorhandensein an sich insbesondere eines Boden-Infraschalls an. In diesem Zusammenhang sei ergänzend noch erwähnt, daß die erfindungsgemäß verwandten Geophonsonden selbstverständlich neben dem bevorzugt auftretenden Boden-Infraschall auch höhere Schallfrequenzen bis zu etwa 1,5 KHz verarbeiten können. Als besonders vorteilhaft, insbesondere als mechanisch und elektrisch störungssicher, hat sich als Tonimpulsschalter für niederfrequente Signale ein vierpoliges Reed-Relais mit fester Schwellwertspannung herausgestellt.

Ein Reed-Relais (s. z.B. "Begriffe der Elektronik" 1981 Franzis-Verlag München, S. 327) ist im Unterschied zu Transistorschaltungen sehr einfach beschaltbar und besonders für extrem kurzzeitige Impulse (Millisekunden) ansprechbar.

Der Schwellwert des erfindungsgemäß verwandten Reed-Relais kann beispielsweise ±2 Volt betragen. Erst bei Auftreten dieses Schwellwerts, d.h. bei Über- oder Unterschreiten einer bestimmten Amplitude des tieffrequenten Signals wird das Reed-Relais tätig und schaltet den piezoelektrischen Signalgeber an die Gleichspannungsquelle. Der piezoelektrische Signalgeber hat den Vorteil, daß er mit einer geringen Leistung einen sehr deutlich hörbaren Ton erzeugen kann.

Die Hörbarkeitsdauer des bei Auftreten eines niederfrequenten Tonimpulses von piezoelektrischen Signalgeber erzeugten Tons wird entsprechend weiteren Erfindungsmerkmalen dadurch verlängert, daß in den Gleichspannungskreis parallel zu den beiden Eingängen des piezoelektrischen Signalgebers ein Kondensator eingeschaltet ist.

Anhand der Zeichnungen ist ein bevorzugtes erfindungsgemäßes Ausführungsbeispiel näher beschrieben:

Es zeigen

Fig. 1 eine Übersichtsdarstellung des erfindungsgemäßen Bodenhorchgeräts nach Art eines Blockschaltbildes,

Fig 2 die schematische räumliche Darstellung einer Dreikomponenten-Geophonsonde,

Fig. 3 die elektrische Schaltung der drei Einzelgeophone der Dreikomponenten-Geophonsonde und

Fig. 4 eine elektrische Schaltung, welche die Elemente zur Verstärkung und Hörbarmachung insbesondere eines tieffrequenten Boden-Infraschall-Signals wiedergibt.

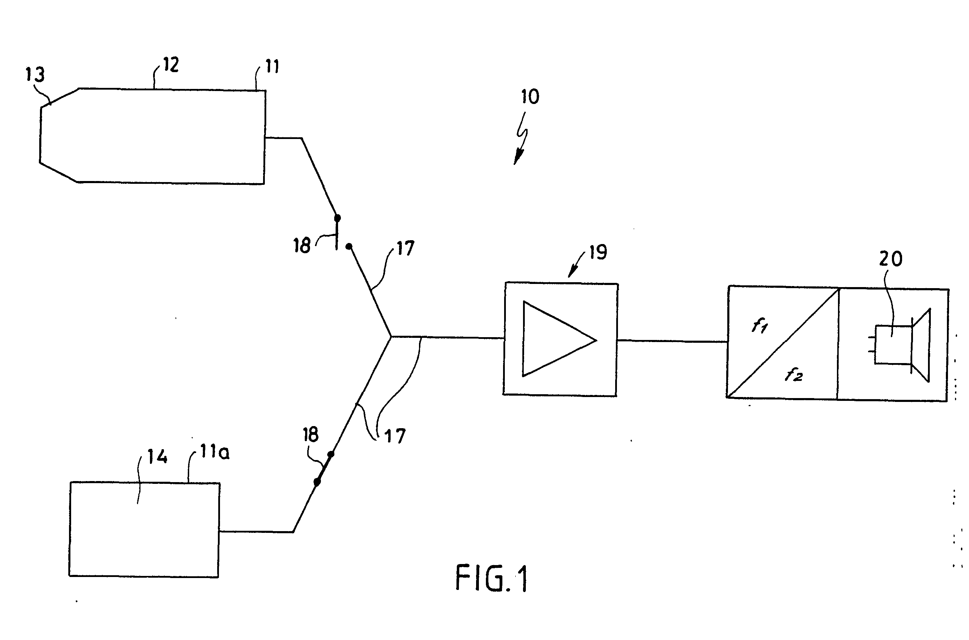

In Fig. 1 ist das insgesamt schematisch nach Art eines Blockschaltbildes dargestellte Bodenhorchgerät mit der Bezugsziffer 10 bezeichnet. Die Schwingungsaufnehmer bestehen aus Dreikomponenten-Geophonsonden 11, 11 a, die sich lediglich durch ihre äußere Umrißform unterscheiden. Die Geophonsonde 11 weist einen mehr langgestreckten kreiszylindrischen Mantelbereich 12 und einen sich am freien Ende der Sonde daran anschließenden kegelstumpfförmigen Mantelbereich 13 auf. Die Sonde 11 ist aufgrund ihrer äußeren Form vornehmlich für den Einsatz in Bohrlöchern geeignet.

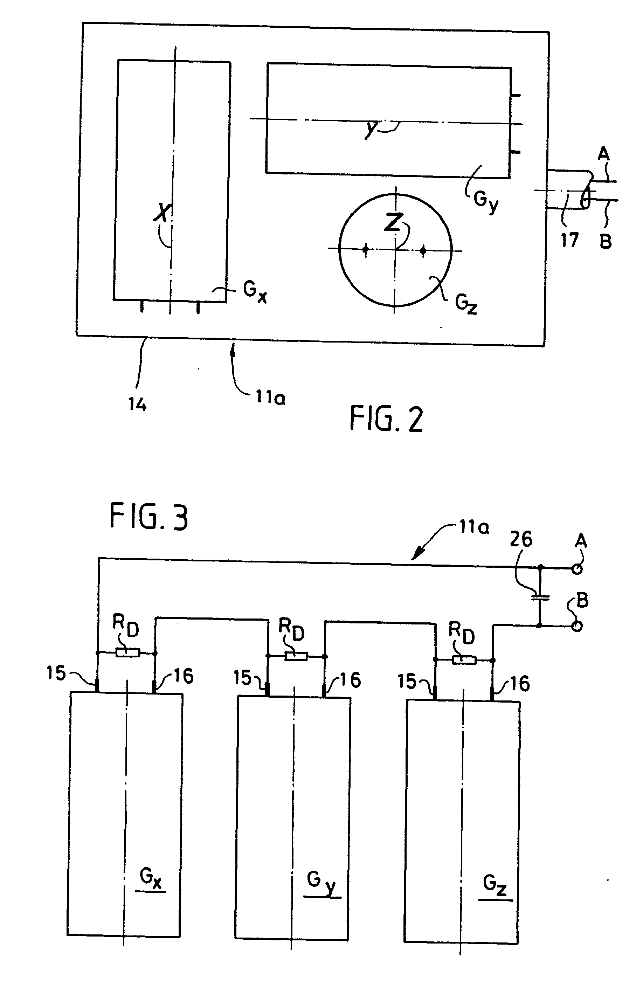

Die Sonde 11 a hingegen weist einen quaderförmigen Mantel 14 auf, zu dessen Außenflächen die drei Einzelgeophone $G_x$, $G_y$, $G_z$ entsprechend den Koordinaten x, y und z eines räumlichen rechtwinkligen Koordinaten-Systems orientiert sind (Fig. 2). Die Koordinatenachsen sind in Fig. 2 entsprechend gekennzeichnet.

Auch die nicht näher bezeichneten Einzelgeophone $G_x$, $G_y$ und $G_z$ der Sonde 11 sind entsprechend dem räumlichen Koordinatensystem x, y, z orientiert.

Das elektrische Schaltbild gemäß Fig. 3 zeigt, daß die jeweils beiden Ausgänge 15, 16 der Einzelgeophone $G_x$-$G_y$ zu einer Reihenschaltung verbunden sind, so daß das Dreikomponenten-Geophon 11 a insgesamt nur zwei elektrische Ausgänge A und B aufweist. Die Ausgänge A, B stehen zugleich für ein zweiadriges Kabel 17, wie es in den Fig. 1 und 2 angedeutet ist.

Parallel zu den Ausgängen 15, 16 der Einzelgeophone $G_x$-$G_z$ ist jeweils ein Dämpfungswiderstand $R_D$ parallelgeschaltet. Der Dämpfungswiderstand $R_D$ hat jeweils die Aufgabe, eine Frequenzüberhöhung durch die Eigenfrequenz des jeweiligen Einzelgeophons $G_x$-$G_z$ von beispielsweise 4,5 Hz zu vermeiden (Fig. 3).

Aus Fig. 1 ist noch zu ersehen, daß mittels zweipoliger Schalter 18 die Sonden 11, 11 a alternativ eingeschaltet werden können.

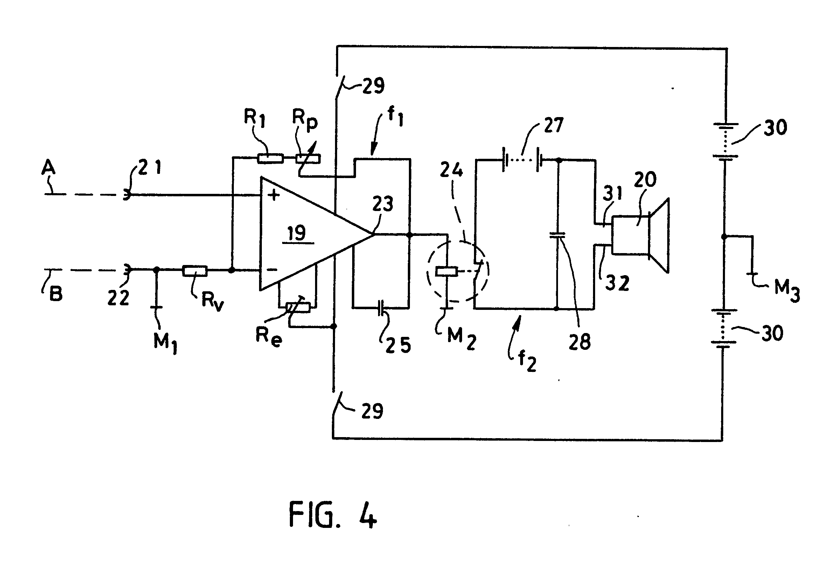

Das durch eine Sonde 11, 11 a aufgenommene tieffrequente Signal wird über das zweiadrige Kabel 17 auf einen insgesamt mit 19 bezeichneten Operationsverstärker gegeben, welcher das tieffrequente verstärkte Signal innerhalb eines Schaltungsbereichs $f_1$ auf einen schnellen elektronischen Schalter 24 (Fig. 4) gibt, der innerhalb eines Gleichspannungskreises $f_2$ einen piezoelektrischen Signalgeber 20 einschaltet. Die Einzelheiten hierzu sind aus Fig. 4 zu ersehen:

Der Plus-Signaleingang des Operationsverstärkers 19 ist mit 21 und der Minus-Signaleingang mit 22 bezeichnet. Der Signaleingang 22 ist über einen Masseanschluß $M_1$ und einen Vorwiderstand $R_v$ an den Minus-Anschluß des Verstärkers 19 geführt. Die verstärkte Signalspannung fällt zwischen dem verstärkerseitigen Ausgang 23 und dem Massepunkt $M_2$ ab. Zum Verstärkerkreis gehören noch die Widerstände $R_1$ und $R_p$, wobei der Widerstand $R_p$ praktisch einen Festwiderstand für den Verstärkungsgrad darstellt. Die beiden hintereinandergeschalteten Widerstände $R_1$, $R_p$ sind parallel zum Minus-Anschluß des Verstärkers 19 und zum Verstärkerausgang 23 geschaltet.

Ein von außen veränderbarer Ohmscher Widerstand $R_e$ dient der Einstellung der Amplitude des verstärkten Signals, insbesondere zur Vermeidung einer Übersteuerung des durch einen gestrichelten Kreis hervorgehobenen Reed-Relais 24. Der feste Schwellwert des Reed-Relais 24 beträgt beispielsweise $\pm 2$ V. Zum Operationsverstärker 19 gehört außerdem der Kondensator 25.

Der außerdem geophonseitig vorgesehene Kondensator 26 (Fig. 3) dient der Aushaltung von Störfrequenzen.

Die Funktion des Bodenhorchgeräts sei wie folgt beschrieben:

Irgendeines oder alle Einzelgeophone $G_x$-$G_z$ gemäß Fig. 3 nehmen ein Signal von beispielsweise 2-8 Hz auf und geben dieses unter Ausschaltung einer Resonanzfrequenz (Dämpfungswiderstand $R_D$) auf das zweiadrige Kabel 17 mit den Adern A und B. Dieses Signal gelangt auf den verstärkerseitigen Eingang 21, 22, wird dort verstärkt und beaufschlagt das vierpolige Reed-Relais 24, welches seinerseits den piezoelektrischen Signalgeber 20 an die Gleichspannungsquelle 27 legt. Dieses geschieht für die Dauer des zwischen 23 und $M_2$ anstehenden tieffrequenten Tonimpulses (Schaltungsbereich $f_1$). Die Dauer des Tonimpulses im Gleichspannungskreis $f_2$ des piezoelektrischen Signalgebers 20 wird durch den parallel eingeschalteten Kondensator 28 verlängert.

Nur ergänzend sei noch erwähnt, daß der Verstärker 19 über den zweipoligen Schalter 29 an eine Gleichspannungsquelle 30 angeschlossen wird. Der diesbezügliche Massenpunkt ist mit $M_3$ bezeichnet.

Die beiden Eingänge des piezoelektrischen Signalgebers 20 sind mit 31, 32 bezeichnet.

**Patentansprüche**

1. Bodenhorchgerät mit mindestens einer Dreikomponenten-Geophonsonde, einem mit dieser über ein Kabel elektrisch verbundenen Operationsverstärker, der das Schwingungssignal der Geophonsonde verstärkt, wonach das verstärkte Signal von einem elektrischen Schallsender hörbar wiedergegeben wird, dadurch gekennzeichnet daß die drei Einzelgeophone ($G_x$, $G_y$, $G_z$) jeder Dreikomponenten-Geophonsonde (11; 11 a) hintereinandergeschaltet sind und die Geophonsonde (11, 11 a) lediglich über ein zweiadriges Kabel (17) mit dem Operationsverstärker (19) verbunden ist, dessen Ausgangssignal einen schnellen elektronischen Schalter (24) betätigt, welcher einen mit einer eigenen Gleichspannungsquelle (27) versehenen piezoelektrischen Signalgeber (20) innerhalb eines Gleichspannungskreises (fz) einschaltet.

2. Bodenhorchgerät nach Anspruch 1, dadurch gekennzeichnet, daß jeweils parallel zu den beiden Ausgängen (15, 16) der Einzelgeophone ($G_x$, $G_y$, $G_z$) ein die Resonanz bei der Eigenfrequenz des Einzelgeophons ($G_x$, $G_y$, $G_z$) unterdrückender Ohmscher Dämpfungswiderstand ($R_D$) eingeschaltet ist.

3. Bodenhorchgerät nach Anspruch 1 oder nach Anspruch 2, dadurch gekennzeichnet, daß parallel zu den beiden Ausgängen (A, B) der Dreikomponenten-Geophonsonde (11, 11 a) ein Kondensator (26) zur Eliminierung von Störfrequenzen, insbesondere von Rundfunkfrequenzen, eingeschaltet ist.

4. Bodenhorchgerät nach einem der vorangehenden Ansprüche, dadurch gekennzeichnet, daß der schnelle elektronische Schalter aus einem vierpoligen Reed-Relais (24) mit fester Schwellwertspannung besteht.

5, Bodenhorchgerät nach einem der, vorangehenden Ansprüche, dadurch gekennzeichnet, daß in den Gleichspannungskreis ($f_2$) parallel zu den beiden Eingängen (31, 32) des piezoelektrischen Signalgebers (20) ein Kondensator (28) eingeschaltet ist.

**Revendications**

1. Appareil d'écoute du sol comprenant au moins une sonde géophonique à trois composants, un amplificateur opérationnel connecté électriquement à cette sonde par un câble et qui amplifie le signal vibratoire de la sonde géophonique, après quoi le signal amplifié est reproduit sous forme audible par un émetteur sonore électrique,

caractérisé en ce que les trois géophones élémentaires ($G_x$, $G_y$, $G_z$) de chaque sonde géophonique (11; 11a) à trois composants sont connectés en série, et la sonde géophonique (11, 11a) est connectée à l'amplificateur opérationnel (19) uniquement par un câble à deux conducteurs (17) dont le signal de sortie actionne un commutateur électronique rapide (24) qui met en circuit dans un circuit de tension continue (fz) un émetteur de signaux piézo-électrique (20) qui est équipé de sa propre source de tension continue (27).

2. Appareil d'écoute du sol selon la revendication 1,

caractérisé en ce qu'en parallèle avec les deux sorties (15, 16) de chaque géophone élémentaire (G$_x$, G$_y$, G$_z$), est connectée une résistance d'affaiblissement ohmique (R$_D$) qui supprime la résonance à la fréquence propre du géophone élémentaire (G$_x$, G$_y$, G$_z$).

3. Appareil d'écoute du sol selon la revendication 1 ou la revendication 2,

caractérisé en ce qu'un condensateur (26) est connecté en parallèle avec les deux sorties (A, B) de la sonde géophonique (11, 11a) à trois composants (11, 11a), pour éliminer les fréquences parasites, notamment les fréquences radiophoniques.

4. Appareil d'écoute du sol selon une des revendications précédentes, caractérisé en ce que le commutateur électronique rapide est constitué par un relais quadripolaire (24) à lamelles possédant une tension seuil fixe.

5. Appareil d'écoute du sol selon une des revendications précédentes,

caractérisé en ce qu'un condensateur (28) est connecté dans le circuit de tension continue (f$_2$), en parallèle avec les deux entrées (31, 32) de l'émetteur de signaux piézo-électrique (20).

**Claims**

1. Ground listening device having at least one three-component geophone probe and an operational amplifier which is electrically connected to said probe by a cable and amplifies the oscillation signal of the geophone probe, whereupon the amplified signal is audibly reproduced by an electric sound transmitter, characterised in that the three individual geophones (G$_x$, G$_y$, G$_z$) of each three-component geophone probe (11; 11a) are connected in series and the geophone probe (11, 11a) is connected only by a twin-core cable (17) to the operational amplifier (19) whose output signal actuates a fast-response electronic switch (24) which switches on a piezoelectric signal transmitter within a direct voltage circuit (fz), said signal transmitter being provided with its own direct voltage source (27).

2. Ground listening device according to claim 1, characterised in that an ohmic damping resistor (R$_D$) which suppresses the resonance in the natural frequency of the individual geophone (G$_x$, G$_y$, G$_z$) is inserted parallel to the two outputs (15, 16) of each individual geophone (G$_x$, G$_y$, G$_z$).

3. Ground listening device according to claim 1 or 2, characterised in that a capacitor (26) for eliminating interference frequencies, in particular radio frequencies, is inserted parallel to the two outputs (A, B) of the three-component geophone probe (11, 11a).

4. Ground listening device according to one of the preceding claims, characterised in that the fast-response electronic switch comprises a four-pole reed relay (24) having a fixed threshold voltage.

5. Ground listening device according to one of the preceding claims, characterised in that a capacitor (28) is inserted in the direct voltage circuit (f$_2$) parallel to the two inputs (31, 32) of the piezoelectric signal transmitter (20).

FIG.1

FIG. 2

FIG. 3

FIG. 4